# EUROPEAN PATENT APPLICATION

(11) **EP 2 645 042 A1**
(43) Date of publication of application: **02.10.2013**
(21) Application number: 12382126.6
(22) Date of filing: 30.03.2012
(51) Int. Cl.: F28F 1/32, F28F 21/08, F28D 1/047, F28F 9/26, B21D 53/08, B23K 1/00, F16L 13/007

(54) **Heat exchanger, household appliance comprising such heat exchanger and method for manufacturing such heat exchanger**

(71) Applicant: BSH Electrodomésticos España, S.A., 31620 Huarte (ES)
(72) Inventor: Otero Garcia, Iñaki, Villaba (Navarra) (ES); San Martin Sancho, Roberto, Estella (ES); Balerdi Azpilicueta, Pilar, 31272 Estella (ES); Rodrigo Torguet, Joaquin, Estella (ES)

(57) **Abstract**

According to the invention, the heat exchanger 1 comprises at least one set of pipes 3, 4, each set of pipes 3, 4 comprising at least two pipes 3, 4, wherein the pipes 3, 4 are mechanically connected by at least one connection structure 5 at least two pipes 3, 4 are made from different metals having a different thermal expansion coefficient; at least two of the pipes 3, 4 having a different thermal expansion coefficient are joined by a soldered joint 11 b or by a brazed joint; and at the joint 11 b of the two pipes 3, 4, the pipe 4 made of the metal having a lower thermal expansion coefficient is inserted into the pipe 3 made of the metal having a higher thermal expansion coefficient. The invention also relates to a household appliance 2, in particular clothes treatment appliance, comprising at least one such heat exchanger 1, and a method for manufacturing such heat exchanger 1.

## Description

The invention relates to a heat exchanger, in particular a finned tube heat exchanger. The invention further relates to a household appliance, in particular a clothes treatment appliance, comprising the heat exchanger. The invention also relates to a method for manufacturing a heat exchanger, in particular a finned tube heat exchanger.

Usually, finned tube heat exchangers (e.g. as used in air conditioning appliances, ice makers, refrigeration / freezing appliances, or heat pumps of clothes dryers) use a combination of materials for their fins and pipes as follows:
- Aluminium fins and copper pipes;
- Copper fins and copper pipes;
- Aluminium fins and aluminium pipes;
- Aluminium fins and stainless steel pipes; or
- Stainless steel fins and stainless steel pipes.

Normally, the price of aluminium is lower than the price of copper or stainless steel. Therefore, there is a cost advantage in using aluminium pipes in heat exchangers. However, the use of aluminium pipes in heat exchangers also has some drawbacks, including that aluminium has a lower conductivity as compared to copper; that a higher thickness is required to withstand a high pressure (although aluminium pipes still weigh less than pipes made from the other metals), and that galvanic corrosion can appear in joints between the aluminium pipes and objects of another metal, especially when they are brazed or soldered (e.g. at heat exchanger elbows, at connections to cooling circuit refrigerant lines etc.).

A brazed joint may in particular be a joint that is obtained by the joining of metal parts by means of alloys which melt at temperatures that are in general higher than 450°C but less than the melting temperature of the joined parts. A soldered joint may in particular be a joint that is obtained by joining of metal parts by means of metallic mixtures or alloys which melt at temperatures of in general less than 450°C.

In particular, the aluminium to copper brazing or soldering entails difficulties due to a lower melting point of aluminium in comparison to copper and a high temperature dependency of the joint on a final microstructure. Thus, a brazed or soldered joint between aluminium and copper may result in structurally weak areas concerning tensile and vibration strength. When such brazing or soldering is implemented in areas submitted to tension, flexion, torsion and/or vibration forces, there is a considerable risk of creating fissures or breakages in these areas and/or in their proximities. Stress and/or the fatigue may, for example, be introduced by fluid lines and may be produced by a vapour compression system either for a heat pump or a refrigerating machine, for example. Stress and/or fatigue may also be introduced by deformations during a manufacturing process, by vibrations or shock caused during transport etc.

Up to now, these problems are partially circumvented by using mechanical connections which provide joints by pressure or a combination of pressure and glue (i.e. using a Vulcan Lockring), which is relatively complex and has a relatively low reliability as compared to brazing or soldering. Another known solution is the use of controlled brazing/soldering processes that are not always accessible to brazing or soldering areas or do not create enough brazing or soldering penetration to withstand required pressures (e.g. induction brazing, ultrasonic brazing).

It is the object of the present invention to at least partially overcome the limitations of prior art and to particularly provide a cost effective, compact, and reliable heat exchanger, in particular a finned tube heat exchanger.

The object is achieved by a heat exchanger, household appliance and method according to the features of the respective independent claim. Preferred embodiments of the invention can be derived, inter alia, from the dependent claims, the subsequent description, and combinations thereof.

The object is achieved by a heat exchanger, comprising at least one set of pipes, each set of pipes comprising at least two pipes, wherein the pipes are mechanically connected by at least one connection structure, wherein at least two pipes are made from different metals having a different thermal expansion coefficient, wherein at least two of the pipes having a different thermal expansion coefficient are joined by a soldered joint or by a brazed joint; and wherein at the joint of the two pipes, the ('inner') pipe made of the metal having the lower thermal expansion coefficient is inserted into the ('outer') pipe made of the metal having the higher thermal expansion coefficient.

This heat exchanger has the advantage that the mechanical connection between the pipes provided by the connection structure limits or restricts their relative movements such that mechanical stresses (tensile forces, flexions, torsions and/or vibration forces) and stress cycle fatigue at the joints between the pipes connected to it can be greatly reduced, damped or even avoided. Thus, the joints at an interface between two pipes (e.g. a pipe elbow and a hairpin pipe) are 'internal' joints and are protected against externally introduced mechanical stresses by the mechanical fixation to and stiffness of the connection structure.

The pipes of one set can be interconnected in series and/or parallely. By interconnecting the pipes of one set in series, an open fluid channel is formed. The end sections of this fluid channel are provided by terminal pipes. The fluid may be a liquid, a vapour or other gas, or a combination thereof.

That two pipes having the different thermal expansion coefficient are joined by a soldered joint or by a brazed joint. Such joint in particular includes that the pipes are mechanically and fluidically joined. It in particular also includes that the pipes are directly connected (via a solder or a braze material). The soldered joint or brazed joint in particular includes a flame soldered joint or flame brazed joint.

If the pipe made of the metal having the higher thermal expansion coefficient was inserted into the pipe made of the metal having the lower thermal expansion coefficient, the expansion of the pipe made of the metal having the higher thermal expansion coefficient would lead to a deformation of the solder or soldering material (often soft zinc). This in turn would lead to cracks inside the joint or joining which may become critical. This negative effect, in principle, does not occur with the heat exchanger as described above. Also, if the pipe made of the metal having the higher thermal expansion coefficient was inserted into the pipe made of the metal having the lower thermal expansion coefficient and if the joint or joining is heated up too much, the inner pipe having the higher thermal expansion coefficient may be strongly deformed or even melt (if the material of the higher thermal expansion coefficient has a lower melting point than the material of the lower thermal expansion coefficient) which will be not visual from outside. This may potentially lead to a bad quality (weak) joint. It is therefore a preferred embodiment that the material of the higher thermal expansion coefficient has a lower melting point than the material of the lower thermal expansion coefficient. Thus, a melting of pipe material at the joint can easily be observed.

The heat exchanger may comprise one set of pipes, e.g. in case of a fluid-to-air heat exchanger. Alternatively, the heat exchanger may comprise more than one set of pipes, in particular two sets of pipes, e.g. in case of a fluid-to-fluid or liquid-to-liquid heat exchanger.

Generally, the cross-section of the pipes can have any desired form (e.g. circular, oval, angular etc.). The cross-section may vary within one set of pipes and/or over different sets of pipes.

According to another preferred embodiment, the metal having the higher thermal expansion coefficient comprises aluminium. Thus at least one pipe (at least mainly) comprises aluminium. This enables the utilisation of a relatively inexpensive pipe. The aluminium may have a purity grade of 95% or above. Alternatively, the metal may be an aluminium alloy.

It is a preferred embodiment that the two terminal pipes are made from a material that is easily connectible to respective fluid lines, in particular made from the same material as the respective fluid line. This embodiment has the advantage that the joint between the fluid lines and the respective terminal pipe can be made particularly rugged and fail-safe to withstand mechanical stresses (in particular by brazing).

According to yet another preferred embodiment, the metal having the lower thermal expansion coefficient comprises copper or steel. Thus, pipes made out of such a metal each have a very good thermal conductivity and may be robustly connected to (often used) copper fluid lines. The copper may be of a purity grade of 95% or above. Alternatively, the metal may be made of a copper alloy.

Thus, it is preferable that a joint of two pipes include a soldered or brazed joint of a pipe made out of copper or steel and a pipe made out of aluminium (and typically a solder material).

According to yet another preferred embodiment, the at least two pipes comprise at least one intermediate pipe and two terminal pipes wherein the two terminal pipes are fluidically connected by the at least one intermediate pipe. In particular, the at least one intermediate pipe is made of the metal having the higher thermal expansion coefficient, in particular aluminium, and the terminal pipes are made of the metal having the lower thermal expansion coefficient, in particular copper. This allows a relatively inexpensive fluid channel of the heat exchanger while providing a robust connection to external fluid lines.

In particular, multiple intermediate pipes may be connected on both ends while the terminal pipes are only connected at one end (to a respective intermediate pipe, e.g. via a pipe elbow). According to an alternative preferred embodiment, the set of pipes comprises only one intermediate pipe and two terminal pipes.

According to yet another preferred embodiment, the pipes comprise pipes ('hairpin pipes') of a basic single 'U' form and/or multiple 'U' form (meander-like form) wherein neighboring hairpin pipes are connected by respective pipe elbows. This embodiment has the advantage that the heat exchanger is easy to assemble and may be of a compact form. In particular, the joints of the pipes can easily be accessed and joined.

The intermediate pipe may comprise different branches.

The terminal pipes may be of a 'U' form or of a straight form (straight pipe or tube).

The connection between the pipes can be effected e.g. by pipe elbows that are bent at least approx. 180°. Generally, the elbows are not restricted to a 180° bend ('U' shaped bend or 'C' shaped bend). The elbows may have two or more connection ends. Elbows may cross each other.

It is another preferred embodiment that at least one pipe elbow is made of the metal having the lower thermal expansion coefficient and is (at the joint) inserted into another pipe, in particular a hairpin pipe, made of the metal having the higher thermal expansion coefficient. This allows easier brazing or soldering since this kind of joint (with the hairpin pipe in particular having a wider end for enabling insertion of the pipe elbow) is more easily accessible for the solder.

It is one particular embodiment that the terminal pipe (e.g. of Cu) is connected to an intermediate pipe (e.g. of Al) by a pipe elbow made of the same material as the terminal pipe (e.g. Cu). Thus the heat exchanger comprises at least one same metal joint (e.g. Cu-Cu) which is particularly resistant against mechanical and/or chemical exposure.

It is one preferred embodiment thereof that at least one pipe elbow is manufactured as a separate element. This may facilitate the manufacturing process and allow a particularly flexible design of the set of pipes.

It is one preferred embodiment thereof that at least one pipe elbow is integrally formed with another pipe, in particular a hairpin pipe. This reduces the number of joints of the set of pipes and thus reduces assembly time. Also, a connection between the set of pipes and the connection structure may be facilitated.

The connection structure may be a heat exchange structure.

According to yet another preferred embodiment, the heat exchanger is a finned tube-type heat exchanger, wherein the connection structure comprises a stack of fins that are penetrated by the pipes. Such a heat exchanger is very compact and efficient. The fins act as a heat exchange structure for the pipes. Within the finned tube-type heat exchanger, the pipes are preferably oriented in the same direction to achieve a particularly compact form.

According to even another preferred embodiment, the heat exchanger is a fluid/air heat exchanger that comprises one set of pipes to transport the fluid.

To connect at least the intermediate pipe to the connection structure (in particular a stack of fins), the connection structure may have one or more slits into which the intermediate pipe may be inserted. This embodiment has the advantage that the heat exchanger is even easier to assemble. In particular, only the joints between the terminal pipes and the intermediate pipe need to be accessed and joined. The connected pipes may be expanded to more strongly contact the connection structure.

One or more heat exchangers may preferably be intended for use or be used in a household appliance, in particular in a clothes treatment appliance, in particular in a clothes drying appliance, in particular in a tumble dryer. The heat exchanger may preferably be part of a heat pump. Then, the pipes are preferably intended to guide or hold a working fluid or refrigerant.

The object is also achieved by a household appliance, in particular a clothes treatment appliance, comprising at least one heat exchanger as described above, wherein the terminal pipes are connected to fluid lines of basically the same material.

This gives the advantage that the joint between the fluid lines and the respective terminal metal pipe shows no material mismatch and can thus be made particularly rugged and fail-safe to withstand mechanical stresses. In particular, galvanic corrosion at or around the joints can be reduced. Fluid lines are often made from copper.

In particular, the household appliance may be a clothes drying appliance. The heat exchanger may in particular be part of a heat pump. Fluid lines in heat pumps of clothes drying appliances are often made from copper.

The object is further achieved by a method for manufacturing a heat exchanger, comprising at least the following steps: (a) Connecting at least two pipes to a connection structure, wherein at least one pipe is made of a metal having a lower thermal expansion coefficient and at least one other pipe is made of a metal having a higher thermal expansion coefficient; (b) (serially and/or parallely) connecting the pipes to each other by brazing or soldering, wherein at the joint of the two pipes, the pipe made of the metal having the lower thermal expansion coefficient is being inserted into the pipe made of the metal having the higher thermal expansion coefficient.

In particular, the at least one pipe that is made of the metal having the lower thermal expansion coefficient comprises at least one intermediate pipe and the at least one pipe that is made of the metal having the higher thermal expansion coefficient comprises two metal terminal pipes, wherein the terminal pipes each comprise one open end and are connected to the at least one intermediate pipe with their other end.

Alternatively, the pipes may be assembled or connected to each other and then be connected to the connection structure, e.g. by inserting them into slits of the connection structure.

It is a preferred embodiment that the method further comprises, in particular after the connecting step: expanding at least some of the (intermediate and/or terminal) pipes (in particular by mechanical means). This achieves an improved contact between the pipes and the connection structure.

It is one more preferred embodiment that a terminal pipe is connected to an intermediate pipe by a pipe elbow, the pipe elbow being made of basically the same material as the at least one intermediate pipe or one terminal pipe. This gives an easy way to manufacture a reliable heat exchanger. Alternatively, the terminal pipes may be directly connected to a respective intermediate pipe.

As already disclosed above, it is a preferred embodiment that the terminal pipes are connected to the respective intermediate pipe by flame brazing or soldering. If using pipe elbows, the terminal pipes may be connected to the respective intermediate pipe by flame brazing or soldering a terminal pipe elbow to one of the terminal pipes and a respective intermediate pipe. The materially mismatched joint is then between the terminal pipe and its terminal pipe elbow or between the intermediate pipe and its terminal pipe elbow.

The object is furthermore achieved by a method for installing a heat exchanger in a household appliance, wherein the heat exchanger is manufactured by the above method, comprising at least the following step: connecting a fluid line to an open end of a respective terminal pipe, wherein the fluid line is made of basically the same material as the respective terminal pipe.

The invention may in particular show one or more of the following advantages:
- Price reduction due to the possibility to use aluminium pipes without incurring additional costs or investments associated with a brazing/soldering/joining process different than direct flame brazing or soldering to connect the fluid lines. Rather, a widely used and cheap brazing/soldering/welding process can be applied to the joints of the terminal pipes.
- These joints are located in areas with reduced stresses (tensile, flexion, torsion, vibration) that may in particular be introduced via fluid (in particular refrigerant) lines.
- A possible galvanic corrosion is restricted to areas that are submitted to reduced stresses or that are stress-free such that the joints are even more resistant during their lifetime.
- This enables a more cost effective heat exchanger with a reduced risk of fluid (in particular refrigerant) leak over its lifetime.

In the figures shown in the accompanying drawing certain preferred embodiments of the invention are schematically described in greater detail.
- Fig.1: shows a schematic diagram of a heat exchanger according to a first embodiment;
- Fig.2: shows a cross-sectional side view of a mismatched joint
- Fig.3: shows a schematic diagram of a heat exchanger according to a second embodiment;
- Fig.4: shows a schematic diagram of a heat exchanger according to a third embodiment;
- Fig.5a: shows a frontal view onto a heat exchanger according to the first, second, or third embodiment;
- Fig.5b-d: show structural elements of fig.5a; and
- Fig.6: shows a frontal view onto a heat exchanger according to a fourth embodiment.

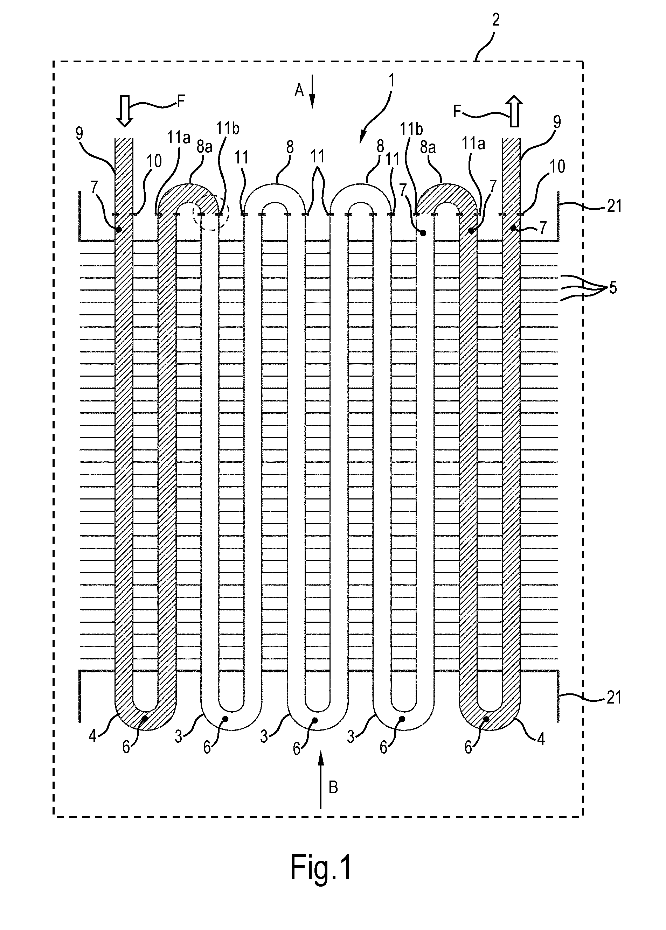

Fig.1 shows a sectional top view onto a heat exchanger 1 or heat exchanger section according to a first embodiment. The heat exchanger 1 is of the finned tube type and may be used, for example, as part of a heat pump of a clothes dryer 2.

The heat exchanger 1 comprises five hairpin pipes 3, 4 of basically the same 'U'-shape that have the same orientation and are aligned in the same direction. Although the hairpin pipes 3, 4 are shown in the same plane for the sake of simplicity, they are generally arranged in a three-dimensional structure. The hairpin pipes 3, 4 are mechanically and thermally connected to a connection structure formed by a stack of fins 5. At its frontal side A and its rearward side B, the stack of fins 5 is covered by a respective end plate 21 for mechanical protection. The straight legs of the hairpin pipes 3, 4 penetrate the fins 5 in a perpendicular fashion. Thus, the bends or bent sections 6 of the hairpin pipes 3, 4 are all situated on one side of the stack of fins 5 while the (open) ends 7 of the hairpin pipes 3, 4 are all situated on the other side of the stack of fins 5. The stack of fins 5 provides stiffness to the heat exchanger 1 and restricts relative movement of the hairpin pipes 3, 4. Thus, the stack of fins 5 restricts or dampens a propagation of externally induced forces and movements to elements of the heat exchanger 1.

The hairpin pipes 3, 4 are connected to form an open-ended fluid channel. To this end, the pipes 3, 4 are connected in pairs such that intermediate (hairpin) pipes 3 are connected to a respective (hairpin) pipe 3, 4 on both ends 7 and two terminal (or terminally located) (hairpin) pipes 4 are each connected to an intermediate pipe 3 on one end 7. The other end 7 of each terminal pipe 4 is not connected to a pipe 3, 4. Thus, a meander-like fluid channel 3 is formed that has two open ends 7 at the terminal pipes 4 which may be used as an inlet opening and outlet opening for the fluid F, respectively.

The connection between the hairpin pipes 3, 4 is effected using pipes in form of pipe elbows 8, 8a that are bent 180° ('U'-shaped or 'C'-shaped pipe elbows 8, 8a). The pipe elbows 8, 8a are attached to the open ends 7 of the hairpin pipes 3, 4 by brazing or soldering, in particular flame brazing or flame soldering, to achieve a particularly durable, compact and cost-effective connection.

To (fluidically) connect the heat exchanger 1 as such, external fluid lines 9 may by fitted to the (yet) open ends 7 of the terminal pipes 4. By means of the external fluid lines 9, fluid F may be introduced into and discharged from the fluid channel 3, 4, 8, 8a as indicated by the straight arrows.

Up to now, if the fluid channel(s) of a heat exchanger was/were completely made of aluminium there would be a material mismatch at a joint between the end of the terminal pipes and the external fluid lines 9 that were mostly made of copper. The joints often showed a reduced stability and a high susceptibility to cracks. This was particularly disadvantageous since mechanical stresses are regularly imposed onto the joints, e.g. by vibration of the external fluid lines during operation of a vapour compression system, for example.

To overcome the problems associated with the joints 10 between the terminal pipes 4 and the external fluid lines 9, the terminal pipes 4 are made of copper (or more generally of the same or a similar material as the external fluid lines 9), as indicated by the hatchings. The intermediate pipes 3 are still made of aluminium. Thus, the joints 10 between the terminal pipes 4 and the external fluid lines 9 do not show a material mismatch or a significant material mismatch anymore. It follows that these joints 10 are much more resistant against mechanical stresses than those known from the prior art.

The pipe elbow 8a in connection with the respective terminal pipe 4 is made of copper such that there is a matched joint 11a with the respective terminal pipe 4 and a mismatched joint 11 b with the neighboring intermediate pipe 3. However, since the intermediate pipes 3 and thus also the mismatched joints 11 b are an integral part of the heat exchanger 1 and held in place by the stack of fins 5, a relative movement (e.g. in modes one to three) between the intermediate pipes 3 and the respective pipe elbows 8a is greatly reduced. The copper/aluminum mismatch at the joints 11 b is therefore not critical anymore for the operation of the heat exchanger 1.

The joints 10, 11, 11a and 11 b are advantageously easily accessible from the outside.

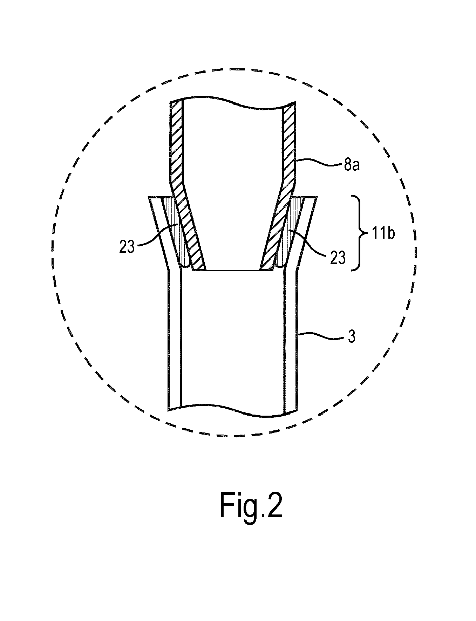

Also, at the mismatched joint 11 b of the pipe elbow 8a made of Cu and the neighboring intermediate pipe 3 made of Al, the pipe elbow 8a is inserted into the intermediate pipe 3, as shown in **fig.2** and fixed to each other by a solder or soldering material 23 like zinc. This kind of joint 11 b has the advantage that a deformation of the soft zinc (which has a similar thermal expansion to Al) and creation of internal cracks inside the mismatched joint 11 b can be avoided. Also, a melting of the Al at the joint during soldering or brazing is easily detectable.

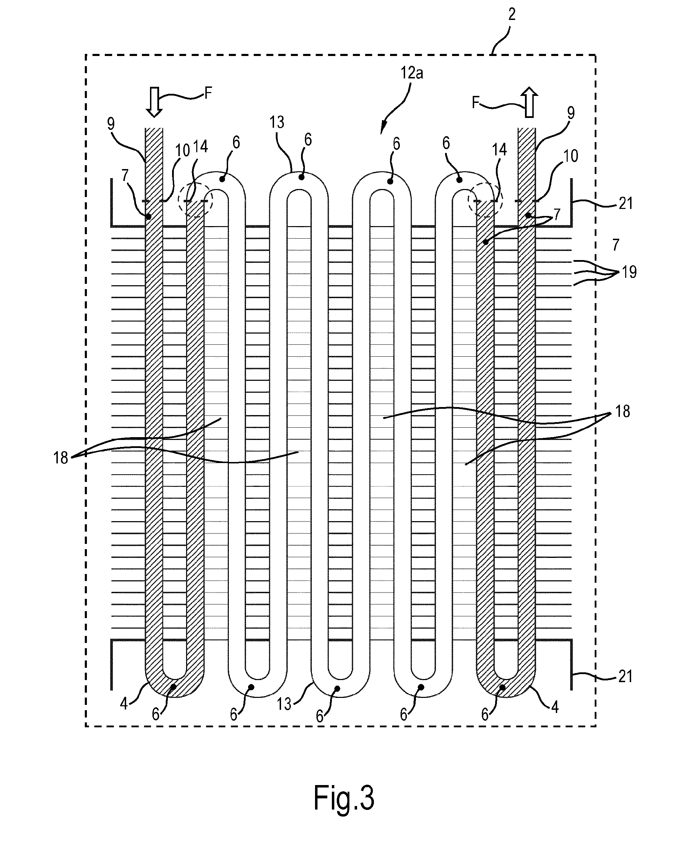

**Fig.3** shows a sectional top view onto a heat exchanger 12a or heat exchanger section according to a second embodiment. The heat exchanger 12a has a generally similar form to the heat exchanger 1 and is also of the finned tube type and may be used, for example, as part of a heat pump of a clothes dryer 2.

The heat exchanger 12a now only uses one intermediate pipe 13 that is shaped as a meander having multiple 'U' or 'C' shaped bent sections 6. There is thus no need anymore to connect the multiple intermediate pipes 3 of the heat exchanger 1.

Another difference to heat exchanger 1 is that the pipe elbow 8a of clothes dryer 2 is integrated into intermediate pipe 13. The only two remaining mismatched joints 14 are thus directly between the intermediate pipe 13 and the two terminal pipes 4, respectively.

The intermediate pipe 13 has been inserted into slits 18 within the stack of fins 19 for connection such that each 'U'-shaped section of the intermediate pipe 13 is inserted into a respective slit 18. Thus, the heat exchanger 12a may be manufactured by connecting the pipes 4, 13, followed by inserting the connected pipes 4, 13 into the connection structure (the stack of fins 19). To hold the pipes fast within the stack of fins 19, the pipes 4, 13 may be expanded mechanically after having been inserted.

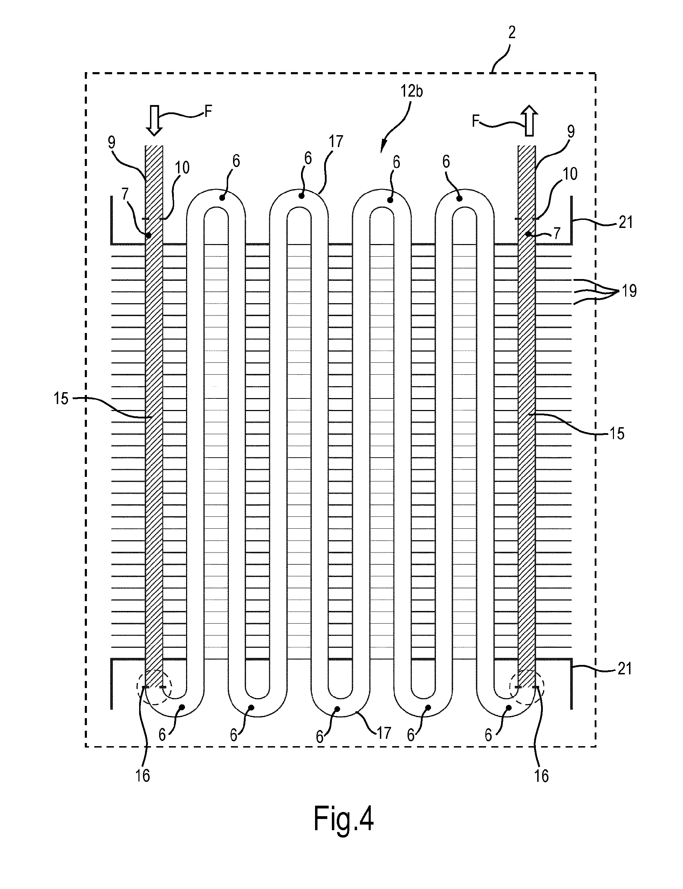

**Fig.4** shows a sectional top view onto a heat exchanger 12b or heat exchanger section according to a third embodiment. Here, the terminal pipes 4 are formed as straight pipes 15 or tubes, connected at joints 16 with the intermediate pipe 17, in particular with an integrated (alternatively: separately manufactured) pipe elbow of the the intermediate pipe 17.

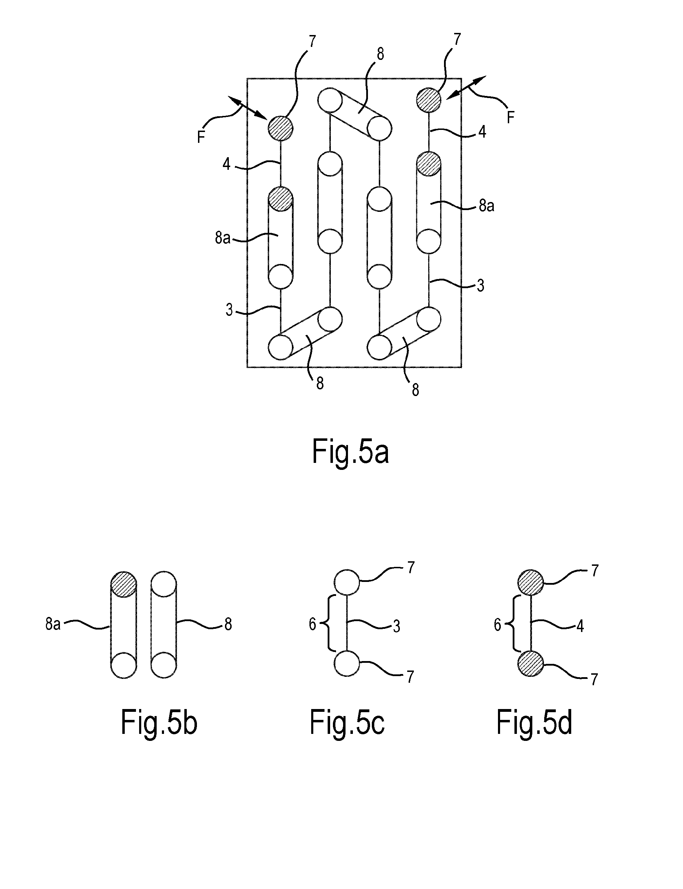

**Fig.5a** shows a frontal view in direction A of fig.1 onto the heat exchanger 1 (now comprising six instead of three intermediate pipes 3). The frontally projecting 'U' shaped or 'C' shaped pipe elbows 8, 8a are depicted as shown in **fig.5b** while the intermediate pipes 3 with their rearward projecting bent sections 6 are depicted as shown in **fig.5c. Fig.5d** shows terminal pipes 4 with their rearward projecting bent sections 6. The aluminium intermediate pipes 3 and pipe elbows 8 of fig.5b and fig.5c are depicted by open faces while the copper terminal pipes 4 are depicted by hatched faces, as e.g. seen in fig. 5b and fig. 5d.

The heat exchanger 1 has a three-dimensional structure for good thermal exchange and for easy placement in the clothes dryer 2. The same basic structure may also apply to the heat exchangers 12a and 12b.

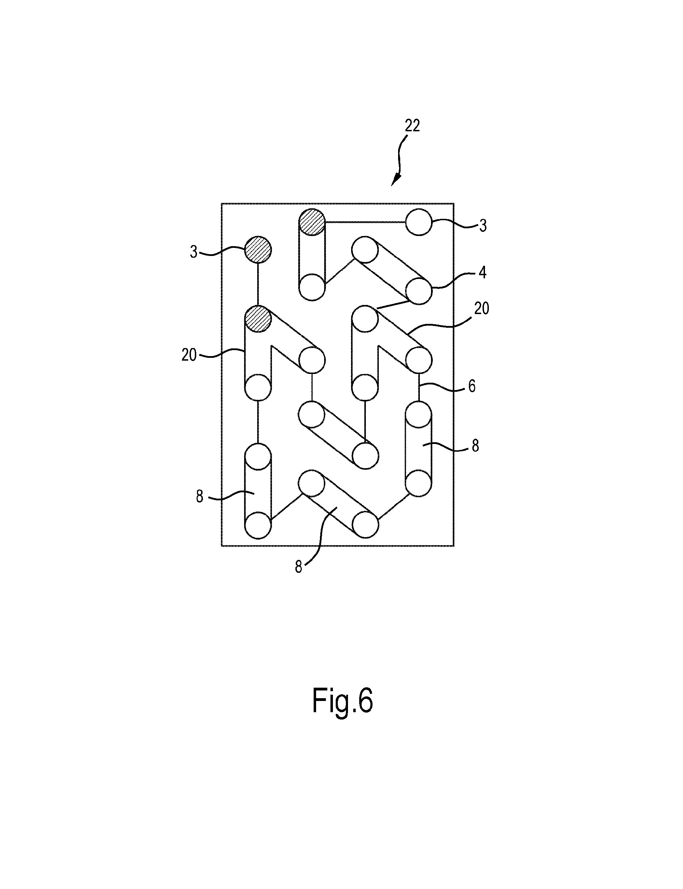

**Fig.6** shows a frontal view onto a heat exchanger 22 according to a fourth embodiment. The heat exchanger 22 may be of a generally similar outline as the heat exchangers 1, 12a, or 12b. However, the elbows 8, 20 may now also comprise branched (three-point or three-ended) elbows 20 to allow for a parallel arrangement of the intermediate pipes 3.

Of course, the invention is not restricted to the shown embodiment.

For example, the number of the intermediate pipes may vary greatly and may comprise one or more than one, in particular five or more, intermediate pipes.

While the preferred embodiment shows a fluid/air heat exchanger comprising one set of pipes forming one fluid channel, the invention is not restricted to it. The heat exchanger may also be a fluid/fluid heat exchanger. The heat exchanger may comprise two or more sets of pipes forming a respective fluid channel.

Instead of copper, any other suitable material having a lower thermal expansion coefficient than aluminium may be used, e.g. steel.

Generally, the pipes may be connected in series and/or in parallel.

Also, joints and pipes may be of a different form or position.

Furthermore, the heat exchanger is not restricted to be a finned tube heat exchanger but may, for example, also be another type of tube heat exchanger.

The heat exchanger may in particular be a part of a heat pump, but is not restricted to it. For example, the heat exchanger may be a condenser of a condenser clothes dryer.

The heat exchanger may in particular be a part of a household appliance, e.g. a clothes dryer or a refrigerator.

The pipe elbows or branched bends may be of another form, e.g. crossed or four- or more-pointed.

Instead of a soldered joint, a brazed joint may be used.

### Reference Numerals

- 1: heat exchanger
- 2: clothes dryer
- 3: pipe
- 4: pipe
- 5: fin
- 6: bent section
- 7: open end
- 8: pipe elbow
- 8a: terminal pipe elbow
- 9: external fluid line
- 10: matched joint
- 11: matched joint
- 11a: matched joint
- 11b: mismatched joint
- 12a: heat exchanger
- 12b: heat exchanger
- 13: intermediate pipe
- 14: joint
- 15: straight pipe
- 16: joint
- 17: intermediate pipe
- 18: slit
- 19: fin
- 20: pipe elbow
- 21: end plate
- 22: heat exchanger
- 23: solder
- F: fluid
- A: frontal side
- B: rearward side

## Claims

1. A heat exchanger (1; 12a; 12b; 22), comprising at least one set of pipes (3, 4; 13; 15, 17), each set of pipes (3, 4; 13; 15, 17) comprising at least two pipes (3, 4; 13; 15, 17), wherein
- the pipes (3, 4; 13; 15; 17) are mechanically connected by at least one connection structure (5; 19)
- at least two pipes (3, 4; 13; 15, 17) are made from different metals having a different thermal expansion coefficient;
- at least two of the pipes (3, 4; 13; 15, 17) having a different thermal expansion coefficient are joined by a soldered joint (11b; 14; 16) or by a brazed joint; and
- at the joint (11b; 14; 16) of the two pipes (3, 4; 13; 15, 17), the pipe (4; 15) made of the metal having a lower thermal expansion coefficient is inserted into the pipe (3; 13; 17) made of the metal having a higher thermal expansion coefficient.

2. The heat exchanger (1; 12a; 12b; 22) according to claim 1, wherein the metal having the higher thermal expansion coefficient comprises aluminium.

3. The heat exchanger (1; 12a; 12b; 22) according to any of the preceding claims, wherein the metal having the lower thermal expansion coefficient comprises copper or steel.

4. The heat exchanger (1; 12a; 12b; 22) according to claim 1, wherein
- the at least two pipes (3, 4; 13; 15, 17) comprise at least one intermediate pipe (3; 13; 17) and two terminal pipes (4; 15);
- the two terminal pipes (4; 15) are fluidically connected by the at least one intermediate pipe (3; 13; 17).

5. The heat exchanger (1; 12a; 12b; 22) according to claim 4, wherein the at least one intermediate pipe (3; 13; 17) is made of the metal having the higher thermal expansion coefficient, in particular aluminium, and the terminal pipes (4; 15) are made of the metal having the lower thermal expansion coefficient, in particular copper.

6. The heat exchanger (1; 22) according to claim 5, wherein the pipes (3, 4) comprise at least one hairpin pipe of a basic single and/or multiple 'U' form and wherein the hairpin pipes (3, 4) are connected by respective pipe elbows (8, 8a, 8b).

7. The heat exchanger (1; 22) according to claim 6, wherein at least one pipe elbow (8b) is made of the metal having the lower thermal expansion coefficient and is inserted into a hairpin pipe (3) made of the metal having the higher thermal expansion coefficient.

8. The heat exchanger (1; 22) according to claim 7, wherein at least one pipe elbow (8, 8a, 8b) is manufactured as a separate element.

9. The heat exchanger (12a, 12b; 22) according or any of the claims 7 or 8, wherein at least one pipe elbow (8, 8a, 8b) is integrally formed with a hairpin pipe (4, 13; 15, 17).

10. The heat exchanger (1; 12a; 12b; 22) according to any of the preceding claims, wherein the heat exchanger (1; 12a; 12b; 22) is a finned tube-type heat exchanger, wherein the connection structure (5; 19) comprises a stack of fins (5; 19) that are penetrated by the pipes (3, 4; 13; 15; 17).

11. A household appliance (2), in particular clothes treatment appliance, comprising at least one heat exchanger (1; 12a; 12b; 22) according to any of the preceding claims.

12. The household appliance (2) according to claim 11, wherein the household appliance (2) is a clothes drying appliance, and the heat exchanger (1; 12a; 12b; 22) is part of a heat pump.

13. A method for manufacturing a heat exchanger (1; 12a; 12b; 22), comprising at least the following steps:
- connecting at least two pipes (3, 4; 13, 5; 17) to a connection structure (5; 19), wherein at least one pipe (3; 13; 17) is made of a metal having a higher thermal expansion coefficient and at least another pipe (4; 15) is made of a metal having a lower thermal expansion coefficient;
- connecting the pipes (3, 4; 13; 15; 17) to each other by brazing or soldering, wherein at a joint the pipe (4; 15) made of the metal having the lower thermal expansion coefficient is inserted into the pipe (3; 13; 17) made of the metal having the higher thermal expansion coefficient.
